# EUROPÄISCHE PATENTSCHRIFT

(11) **EP 3 234 434 B1**
(45) Veröffentlichungstag und Bekanntmachung des Hinweises auf die Patenterteilung: **06.09.2023**
(21) Anmeldenummer: 15823130.8
(22) Anmeldetag: 14.12.2015
(51) Int. Cl.: F16L 53/38

(54) **BEHEIZBARE MEDIENLEITUNG SOWIE VERFAHREN ZUM HERSTELLEN EINER BEHEIZBAREN MEDIENLEITUNG**
HEATABLE MEDIA LINE AND METHOD FOR PRODUCING A HEATABLE MEDIA LINE
CONDUITE DE FLUIDE CHAUFFANTE ET PROCÉDÉ POUR FABRIQUER UNE CONDUITE DE FLUIDE CHAUFFANTE

(30) Priorität: 15.12.2014 DE 102014018371
(43) Veröffentlichungstag der Anmeldung: 25.10.2017
(60) Teilanmeldung: 23020161.8
(73) Patentinhaber: Voss Automotive GmbH, 51688 Wipperfürth (DE)
(72) Erfinder: SACHSE, Martin, 51688 Wipperfürth (DE); ISENBURG, Marco, 40885 Ratingen (DE); ETSCHEID, Tobias, 51789 Lindlar (DE); PREISS, Oliver, 40882 Ratingen (DE); STELLUTO, Michele, 42859 Remscheid (DE)
(74) Vertreter: Rebbereh, Cornelia
(86) Internationale Anmeldenummer: PCT/EP2015/002506
(87) Internationale Veröffentlichungsnummer: WO 2016/096113

(56) Entgegenhaltungen:
- WO-A1-2008/131993
- WO-A1-2015/104218
- DE-A1- 19 844 486
- DE-A1-102012 002 411
- DE-A1-102014 005 093
- US-A- 4 194 536
- US-A- 4 553 023
- US-A1- 2003 007 789
- US-A1- 2005 274 713

## Beschreibung

Die Erfindung betrifft eine beheizbare Medienleitung mit einer rohrförmigen Medienleitung, zumindest einem Heizelement in außenseitiger Anordnung auf der rohrförmigen Medienleitung und zumindest einer Fixiereinrichtung zum Fixieren der Position des zumindest einen Heizelements auf der Außenseite der rohrförmigen Medienleitung, eine konfektionierte beheizbare Medienleitung mit einer solchen beheizbaren Medienleitung sowie ein Verfahren zum Herstellen einer solchen beheizbaren Medienleitung, wobei zumindest eine rohrförmige Medienleitung mit zumindest einem Heizelement außenseitig bewickelt wird.

Derartige beheizbare Medienleitungen und Verfahren zu deren Herstellung sind im Stand der Technik bekannt. Diese dienen insbesondere in Fahrzeugen zum Leiten von flüssigen gefrierfähigen bzw. gefriergefährdeten Medien. Die beheizbare Medienleitung weist ein inneres Leitungslumen auf, das von dem Medium durchströmt werden kann. Bei niedrigen Temperaturen droht das durch die beheizbare Medienleitung strömende Medium einzufrieren, so dass es bekannt ist, durch Vorsehen von Heizelementen entlang der Medienleitung und ggf. von mit dieser verbundenen Anschlussbauteilen eine Beheizbarkeit vorzusehen. Unter gefriergefährdeten Medien werden hier Medien verstanden, die aufgrund eines relativ höhen Gefrierpunktes bereits bei noch recht hohen Umgebungstemperaturen zum Gefrieren neigen, wodurch die Funktionsfähigkeit beispielsweise eines Fahrzeug beeinträchtigt oder sogar erheblich gestört werden kann. Ersichtlich ist dies insbesondere bei wasserführenden Medienleitungen ebenso wie bei Medienleitungen, die von einer wässrigen Harnstofflösung als Medium durchströmt werden, wie z.B. AdBlue^{®}, der Fall, die als NOₓ-Reaktionsadditiv für Dieselmotoren mit sogenannten SCR-Katalysatoren eingesetzt wird (SCR = Selektiv Catalytic Reduction). Es wird daher üblicherweise eine Beheizungsmöglichkeit für die Medienleitung bzw. zumindest Teile von dieser und oftmals auch für die Anschlussbauteile vorgesehen, um ein Einfrieren des Mediums innerhalb der konfektionierten beheizbaren Medienleitung zu vermeiden bzw. um ein Auftauen eines bereits eingefrorenen Mediums zu ermöglichen.

Bei Anordnen zumindest eines Heizelementes auf der Außenseite der rohrförmigen Medienleitung wird dieses durch zumindest eine Fixiereinrichtung bezüglich seiner Position auf der Außenseite der rohrförmigen Medienleitung fixiert, um ein Ändern der Position des Heizelements und dadurch eine Änderung der Beheizbarkeit der Medienleitung bzw. durch diese hindurch strömenden Mediums zu vermeiden. Zum Fixieren des zumindest einen Heizelementes auf der Außenseite der rohrförmigen Medienleitung ist es bekannt, ein Klebe-, Gewebe- oder Gewebeklebeband zu verwenden, das insbesondere dem Verlauf des zumindest einen Heizelementes folgend über diesem angeordnet und auf der Außenseite der rohrförmigen Medienleitung klebend haftet.

Die WO 2008/131993 A1 offenbart einen Leitungsverbinder für Medienleitungen, bestehend aus einem Verbinderstück mit zumindest einem Anschlussabschnitt zur Anschlussverbindung mit einer Medienleitung und mit einem an den Anschlussabschnitt angrenzenden Übergangsabschnitt mit einem Strömungskanal, wobei zumindest im Bereich des Übergangsabschnitts elektrische Heizmittel in einer den Strömungskanal zumindest teilweise umschließenden Anordnung vorgesehen sind. Die beheizbare Medienleitung umfasst eine innere Rohrleitung und ein auf deren Oberfläche angeordnetes elektrisches Heizelement. Um das elektrische Heizelement herum ist ein Schutzmantel umfangsseitig aufgebracht. Der äußere Schutzmantel besteht aus einer Klebebandwicklung, aus einer Extrusionsschicht oder einem Schrumpfschlauch aus Kunststoff und bildet einen äußeren Schutz gegen Beschädigung und Feuchtigkeit. Das Heizelement ist in einer Variante als Flächenheizelement ausgebildet, das streifenförmig in Längsrichtung der Rohrleitung verlaufend angeordnet ist. Es besteht aus einem Träger, auf dem elektrische Heizleiter fixiert sind. Die elektrischen Heizleiter werden mit auf dem Träger angeordneten Kontaktleitern elektrisch leitend verbunden. Der Träger ist als aus einem textilen Vliesmaterial, einem Gewirk, einem Gewebe, einem Schaumstoff aus Kunststoff oder aus einer Kombination dieser Materialien.

Aus der US 4,553,023 A ist ein thermisch isolierter, elektrisch beheizter Schlauch zum Durchleiten von heißen Flüssigkeiten bekannt. Der Schlauch umfasst eine Teflonleitung mit Edelstahldrahtgeflecht und hydraulischen Anschlüssen an seinen Enden. Zum teilweisen Schmelzen von innerhalb des Schlauchs enthaltenen Materials enthält der Schlauch elektrische Widerstandsheizdrähte, die innerhalb des Schlauchs enthalten sind und sich in Längsrichtung von diesem erstrecken. Die Heizdrähte sind mit Isoliermaterial beschichtet, um einem Benutzer das gefahrlose Angreifen der Leitung zu ermöglichen. Zum Herstellen der Leitung wird zunächst eine Teflonleitung mit einem Edelstahldrahtgeflecht umflochten. Die umflochtene Leitung wird mit einem doppelseitigen Glasfaser-Isolierband umwickelt mit einander überlappenden Windungen. Das Isolierband weist auf seinen beiden Oberflächen ein wärmehärtbares Klebemittel auf, dementsprechend haftet es sowohl an dem Geflecht der Leitung als auch an den Heizdrähten, die schraubenförmig um das Glasfaserband herumgewunden sind.

Die US 2003/007789 A1 offenbart eine isolierte Leitung mit einem Rohr zum Durchleiten von heißen Flüssigkeiten. Das Rohr ist eingehüllt in eine Verstärkungsschicht mit einer Außenseite. Ein Heizdraht, der einen inneren Kern aufweist, der von einem Schutzmantel umhüllt ist, ist um die Verstärkungsschicht herum gewunden, so dass der Schutzmantel in direktem Kontakt mit der Außenseite der Verstärkungsschicht steht. Um den Heizdraht, einen Temperatursensor und die Stahlgeflecht-Beschichtung wird eine einzelne Schicht eines doppelseitigen Klebebandes gewunden. Eine thermische Isolierschicht wird über das doppelseitige Klebeband gewunden. Nach dem Aufbringen der thermischen Isolierschicht werden fünf elektrische Leiter schraubenförmig um die thermische Isolierschicht herum gewunden und erstrecken sich zwischen dem Verbinder des Kabelstrangs und dem Verbinder am Austrittsende der Leitung.

Aus der US 2005/0274713 A1 geht eine Leitung mit einem elektrischen Heizer hervor, der sich entlang der Leitung erstreckt, und mit einem thermisch isolierenden Mantel, der sich um die Leitung und den elektrischen Heizer erstreckt. Die Leitung umfasst ein inneres Kunststoffrohr, das innerhalb eines verformbaren Metallrohres aufgenommen ist, so dass das innere Kunststoffrohr und das verformbare Metallrohr eine doppelwandige Compositstruktur bilden. Der Heizer ist in Form eines Heizkabels ausgebildet, das auf der Leitung durch eine Einwickelfolie gesichert ist. Die Einwickelfolie ist demgegenüber mit einer Glasfaserbandeinwickelschicht bedeckt, die ihrerseits in einer Polymerschutzhülle aufgenommen ist.

Die US 4,194,536 A offenbart eine längliche elastische Composit-Rohrleitung zum Aufrechterhalten und Kontrollieren der Temperatur einer Flüssigkeit, die dort hindurchgeleitet wird. Diese umfasst ein oder mehrere rohrförmige Fluidbeförderungsleitungen, die in wärmeleitender Verbindung mit ein oder mehreren Heizleitungen angeordnet sind und die dort herum eine verbesserte flexible Wärmeschutzschicht aufweisen. Die rohrförmige Fluidleitung weist ein Verstärkungsmaterial auf, die zum Verbessern der Festigkeit dort herum angeordnet sind. Ferner ist eine elektrische Heizleitung wärmeübertragend benachbart zu der rohrförmigen Fluidleitung angeordnet. Durch ein Element sind beide umwickelt, wobei das Element ein Metall-Polymer-Laminat mit zwei Schichten ist und einen Kupferanteil aufweist, der in Kontakt mit der Leitung und der Heizleitung steht.

Die DE 198 44 486 A1 offenbart eine beheizbare Rohrleitung für Kraftfahrzeug-Bremsanlagen, bei der ein Heizleiter in Folienform um die Außenwand der Rohrleitung mit einer bestimmten Ganghöhe gewickelt wird. Der Heizleiter ist zwischen einer Isolationsfolie und einer Anpressfolie eingebettet. Um die Rohrleitung wird zunächst eine elektrisch isolierende Folie gewickelt, die beispielsweise aus einem Polyestermaterial besteht. Auf die Isolationsfolie wird der Heizleiter in Form einer Folie gewickelt. Auf den Heizleiter wird die elektrisch isolierende Anpressfolie gewickelt.

Aus der DE 10 2012 002 411 A1 geht eine beheizbare Medienleitung mit einer Medienleitung, zumindest einem Leitungsverbinder und einem Heizelement hervor, wobei das Heizelement zumindest eine Litze aufweist. Die Litze erstreckt sich durchgängig sowohl entlang der Medienleitung als auch entlang dem zumindest einen Leitungsverbinder. Die Medienleitung weist eine ein- oder mehrlagige Innenschicht auf, auf deren Außenseite eine druckaufnehmende Außenschicht in Form eines Druckträgers vorgesehen ist. Auf der Außenseite des Druckträgers ist das Heizelement zum Beheizen der Medienleitung aufgebracht. Das Heizelement bzw. dessen Litzen sind um die mit dem Druckträger versehene Medienleitung herum gewickelt. Die Litzen werden auf dem Druckträger fixiert bzw. befestigt, wobei als Fixiereinrichtung ein Klebe-, Gewebeklebe- oder Gewebeband offenbart ist, das durch kontinuierliches Umwickeln aufgebracht wird.

Derartige rohrförmige und mit zumindest einem Heizelement versehene Medienleitungen werden üblicherweise als Endlosware vorkonfektioniert und bedarfsgerecht abgelängt und endseitig mit zumindest einem Leitungsverbinder versehen, um die so hergestellte und fertig konfektionierte beheizbare Medienleitung beispielsweise mit einem Aggregat oder einer anderen Medienleitung verbinden zu können. Zum Befestigen des zumindest einen Leitungsverbinders endseitig an der abgelängten Medienleitung und insbesondere zum Kontaktieren des zumindest einen Heizelementes, das außenseitig auf der Medienleitung angeordnet ist, ist es üblicherweise erforderlich, die Fixiereinrichtung zumindest teilweise von der Außenseite der Medienleitung und des Heizelementes, insbesondere von dessen außenseitiger Isolierummantelung, zu entfernen. Soll eine Laserschweißverbindung zum Verbinden der rohrförmigen Medienleitung mit einem Leitungsverbinder, insbesondere Steckverbinder, vorgesehen werden, ergeben sich Probleme im Hinblick auf das Laserschweißen, sofern nach dem Entfernen der Fixiereinrichtung noch Reste von Fixiermittel, insbesondere Kleberreste, auf der rohrförmigen Medienleitung verblieben sind. Dementsprechend ist es üblicherweise erforderlich, derartige Reste von Fixiermittel, insbesondere Kleberreste, von der Außenseite der rohrförmigen Medienleitung nach dem Entfernen der Fixiereinrichtung in einem weiteren Bearbeitungsschritt ebenfalls noch zu entfernen. Dies erweist sich allerdings als aufwendig und führt ferner zu zusätzlichen Kosten bei der Konfektionierung einer beheizbaren Medienleitung mit zumindest einem Leitungsverbinder bei Vorsehen einer Laserverschweißung an der oder den Verbindungsstelle(n). Unter dem Konfektionieren einer Medienleitung wird die Endstufe der Herstellung einer einbaufertigen beheizbaren Medienleitung verstanden, wobei die beheizbare Medienleitung endseitig mit zumindest einem Leitungsverbinder verbunden wird, so dass sie nachfolgend beispielsweise in ein Kraftfahrzeug eingebaut werden kann. Durch das Erfordernis eines Reinigungsprozesses zum Entfernen von Resten von Fixiermittel, wie Kleberresten, von der Außenseite der rohrförmigen Medienleitung vor deren Konfektionieren mit zumindest einem Leitungsverbinder, wenn dabei eine Laserschweißverbindung vorgesehen werden soll, dauert die Herstellung einer konfektionierten beheizbaren Medienleitung dementsprechend länger und ist aufwendiger als dies bei Vorsehen einer anderen Verbindung von rohrförmiger Medienleitung und Leitungsverbinder der Fall ist, bei der ein Entfernen von Resten von Fixiermittel, insbesondere Kleberresten, nicht erforderlich ist.

Der vorliegenden Erfindung liegt daher die Aufgabe zugrunde, eine beheizbare Medienleitung sowie ein Verfahren zum Herstellen einer solchen beheizbaren Medienleitung vorzusehen, bei der bzw. dem die vorstehend genannten Probleme nicht mehr auftreten, mittels derer also auch bei einem gewünschten Laserschweißverbinden der beheizbaren Medienleitung mit einem endseitig an diese anzufügenden Leitungsverbinder ein vergleichsweise einfacheres und schnelleres Konfektionieren möglich ist als bislang.

Die Aufgabe wird durch eine beheizbare Medienleitung nach Anspruch 1 gelöst.

Die Aufgabe wird ferner durch ein Verfahren nach Anspruch 9 gelöst.

Dadurch werden eine beheizbare Medienleitung mit einer rohrförmigen Medienleitung, zumindest einem Heizelement und zumindest einer Fixiereinrichtung sowie ein Verfahren zum Herstellen einer solchen beheizbaren Medienleitung geschaffen, bei der bzw. dem zumindest ein hochtemperaturfestes Folienelement über und/oder unter der Bewicklung der rohrförmigen Medienleitung mit dem zumindest einen Heizelement aufgebracht wird, um zu verhindern, dass adhäsives Fixiermittel, wie Klebemittel, von der Fixiereinrichtung auf die Außenseite der rohrförmigen Medienleitung und/oder auf die Außenseite des zumindest einen Heizelements gelangt. Unter einem hochtemperaturfesten Folienelement wird ein Folienelement verstanden, das beschädigungsfrei Temperaturen von 150 °C und mehr ausgesetzt werden kann. Dies erweist sich beim Einbau einer solchen beheizbaren Medienleitung bzw. konfektionierten Medienleitung in einem Heißbereich eines Fahrzeugs, wie im Bereich des Fahrzeugmotors, als vorteilhaft, da dort im Betrieb des Fahrzeugs entsprechend hohe Temperaturen auftreten (können).

Durch das Vorsehen des hochtemperaturfesten Folienelements ist es möglich, die Außenseite der rohrförmigen Medienleitung vor dem Anhaften von Fixiermittel, wie Klebemittel, der Fixiereinrichtung zu schützen. Das hochtemperaturfeste Folienelement verhindert insofern einen Kontakt von Fixiermittel der Fixiereinrichtung mit der Außenseite der rohrförmigen Medienleitung und/oder einer äußeren Isolierummantelung des zumindest einen Heizelementes, also dessen Außenseite. Dementsprechend ist es nicht mehr erforderlich, zum Laserschweißverbinden der rohrförmigen Medienleitung mit einem Leitungsverbinder zum Konfektionieren der beheizbaren Medienleitung von der Außenseite der rohrförmigen Medienleitung und/oder der Isolierummantelung des zumindest einen Heizelementes nach dem Ablösen einer Fixiereinrichtung insbesondere in Form eines Klebe-, Gewebe- oder Gewebeklebebandes deren Reste des Fixiermittels, insbesondere Klebemittelreste, aufwendig zu entfernen. Da durch das Zwischenfügen des hochtemperaturfesten Folienelementes zwischen die Fixiereinrichtung und die Außenseite der rohrförmigen Medienleitung und/oder die Außenseite einer Isolierummantelung des zumindest einen Heizelementes kein Fixiermittel, wie Klebemittel, mehr gelangt, ist auch kein aufwendiger Reinigungsprozess zum Entfernen derartiger Reste eines Fixiermittels, wie Klebemittels, von dort mehr erforderlich. Der Fertigungsprozess bzw. der Konfektionierungsprozess der beheizbaren Medienleitung mit zumindest einem endseitig an dieser angeordneten bzw. anzuordnenden Leitungsverbinder wird dadurch vereinfacht und auch kostengünstiger, da der zusätzliche Aufwand zum Entfernen von Fixiermittelresten, wie Klebemittelresten, entfällt.

Ein weiterer Vorteil ergibt sich auch daraus, dass bei Zwischenfügen des zumindest einen hochtemperaturfesten Folienelementes zwischen die Außenseite der rohrfömigen Medienleitung und die Isolierummantelung des zumindest einen Heizelementes bzw. das zumindest eine Heizelement einerseits die Oberfläche der rohrförmigen Medienleitung geschützt wird und andererseits beim Umwickeln derselben mit dem zumindest einem Heizelement dieses weniger stark in die Oberfläche der rohrförmigen Medienleitung eindringt. Hierdurch wird eine glattere Fläche für die Laserverschweißung von rohrförmiger Medienleitung und Leitungsverbinder geschaffen.

Für die Reihenfolge der Anordnung von Heizelement(en), zumindest einem hochtemperaturfesten Folienelement und Fixiereinrichtung auf der Außenseite der rohrförmigen Medienleitung sind verschiedene Varianten möglich. Hierbei kann das zumindest eine hochtemperaturfeste Folienelement auf der Außenseite der mit dem zumindest einen Heizelement bewickelten rohrförmigen Medienleitung angeordnet sein oder werden. Die zumindest eine Fixiereinrichtung kann dementsprechend über dem hochtemperaturfesten Folienelement angeordnet sein oder werden. Hierdurch wird sichergestellt, dass die insbesondere als Klebe-, Gewebe- oder Gewebeklebeband ausgebildete Fixiereinrichtung die Außenseite der rohrförmigen Medienleitung nicht berührt, somit die Klebeschicht bzw. das Fixiermittel der Fixiereinrichtung nicht mit der Außenseite der rohrförmigen Medienleitung in Kontakt tritt. Da das zumindest eine Heizelement vorteilhaft ebenfalls unter dem hochtemperaturfesten Folienelement angeordnet ist, tritt die zumindest eine Fixiereinrichtung insbesondere in Form eines Klebe-, Gewebe- oder Gewebeklebebandes mit diesem ebenfalls nicht in Kontakt, kann sich jedoch außen auf dem Folienelement entlang dem zumindest einen Heizelement erstrecken, kann also dem Verlauf des zumindest einen Heizelementes bzw. der Bewicklung mit dem zumindest einen Heizelement auf der Außenseite des hochtemperaturfesten Folienelementes folgen. Sofern das zumindest eine hochtemperaturfeste Folienelement lediglich lose auf der Außenseite der mit dem zumindest einen Heizelement versehenen rohrförmigen Medienleitung angeordnet ist, kann eine Positionsfixierung des Heizelementes auf der Außenseite der rohrförmigen Medienleitung durch die zumindest eine zusätzliche Fixiereinrichtung geschaffen werden.

Wird das hochtemperaturfeste Folienelement auf der Außenseite der rohrförmigen Medienleitung und der Bewicklung von dieser mit dem zumindest einen Heizelement so fest aufgebracht, dass hierdurch auch zugleich eine Fixierung der Position des zumindest einen Heizelements auf der rohrförmigen Medienleitung ermöglicht wird, kann das zusätzliche Vorsehen einer Fixiereinrichtung entfallen. Hierbei wird das hochtemperaturfeste Folienelement so fest bzw. eng über dem zumindest einen außenseitig die rohrförmige Medienleitung umgebenden Heizelement angeordnet, dass zur Fixierung desselben auf der Außenseite der rohrförmigen Medienleitung keine weitere Fixiereinrichtung erforderlich ist. Das hochtemperaturfeste Folienelement dient dann als Fixiereinrichtung zum Fixieren des zumindest einen Heizelementes auf der Außenseite der rohrförmigen Medienleitung. In Abhängigkeit davon, wie fest bzw. eng umgebend das hochtemperaturfeste Folienelement auf der Außenseite von rohrförmiger Medienleitung mit Heizelementumwicklung angeordnet ist oder wird, kann somit das zusätzliche Vorsehen einer Fixiereinrichtung insbesondere in Form eines Klebe-, Gewebe- oder Gewebeklebebandes entfallen.

Vorteilhaft kann jedoch endseitig oder endseitig und im mittleren Bereich der mit dem zumindest einen Heizelement und dem zumindest einen hochtemperaturfesten Folienelement versehenen rohrförmigen Medienleitung eine Fixierung des hochtemperaturfesten Folienelements durch zumindest ein adhäsives Fixierband vorgesehen sein. Es wird somit nicht vollständig entlang der Längserstreckung der Bewicklung mit dem hochtemperaturfesten Folienelement auf dessen Außenseite eine Fixiereinrichtung in Form eines insbesondere als Klebe-, Gewebe- oder Gewebeklebeband ausgebildeten Fixierbandes angeordnet, sondern lediglich im endseitigen Bereich der beheizbaren Medienleitung und ggf. auch im mittleren Bereich von dieser. Zum Konfektionieren der beheizbaren Medienleitung wird die mit den Heizelementen und dem hochtemperaturfesten Folienelement vorkonfektionierte Medienleitung zunächst in einer vorgebbaren Länge, die von Fall zu Fall unterschiedlich sein kann, abgelängt, das hochtemperaturfeste Folienelement in zumindest einem vorgebbaren Abschnitt durch zumindest ein adhäsives Fixierband gegen ein Lockern und/oder Ablösen gesichert, das hochtemperaturfeste Folienelement endseitig bis zu dem adhäsiven Fixierband entfernt und das zumindest eine Heizelement freigelegt und bis zum adhäsiven Fixierband rückgewickelt. Zum Verhindern eines Lockerns und/oder Ablösens des hochtemperaturfesten Folienelements entlang der zu verwendenden beheizbaren Medienleitung wird insbesondere in einem endseitigen Abschnitt oder Bereich und in einem mittleren Abschnitt oder Bereich der beheizbaren Medienleitung das adhäsive Fixierband zum Verhindern eines Lockerns und/oder Ablösens des hochtemperaturfesten Folienelements auf dieses aufgebracht. Insbesondere können zwei adhäsive Fixierbänder in Längsrichtung der beheizbaren Medienleitung nebeneinander mit Abstand zueinander oder überlappend aufgebracht werden. Das näher am Ende der beheizbaren Medienleitung bzw. deren freigelegten rohrförmigen Medienleitung angeordnete erste adhäsive Fixierband dient dabei der Refixierung des hochtemperarturfesten Folienelements und des zumindest einen Heizelementes auf der rohrförmigen Medienleitung. Das hierzu benachbarte zweite adhäsive Fixierband dient lediglich der Refixierung des hochtemperaturfesten Folienelementes, um ein unbeabsichtigtes Lockern und/oder Ablösen desselben von der Außenseite der beheizbaren Medienleitung bzw. der rohrförmigen Medienleitung mit den darauf gewickelten Windungen des zumindest einen Heizelementes zu verhindern. Im Prinzip reicht bereits dieses zweite adhäsive Fixierband aus, um eine Refixierung des hochtemperaturfesten Folienelementes auf der Außenseite der mit dem zumindest einen Heizelement bewickelten bzw. versehenen rohrförmigen Medienleitung vorzusehen. Das näher am Ende der beheizbaren Medienleitung angeordnete adhäsive Fixierband kann dementsprechend auch weggelassen werden. Sind zwei nebeneinander angeordnete Fixierbänder vorgesehen, kann ein geringfügiger Spalt oder eine geringfügige Überdeckung zwischen diesen vorgesehen, beispielsweise ein Spalt von 0 mm bis 2,5 mm bzw. eine Überlappung von 0 mm bis 2,5 mm bei einer Fixierbandbreite von beispielsweise 9 mm +/- 1 mm bzw. 15 mm +/- 1 mm. Insbesondere ist zumindest eines der beiden adhäsiven Fixierbänder als Gewebeklebeband ausgebildet.

Ferner ist es möglich, die zumindest eine Fixiereinrichtung mit einer adhäsiven Oberfläche zu versehen und auf der Außenseite der mit dem zumindest einen Heizelement bewickelten Medienleitung so anzuordnen, dass die adhäsive Oberfläche von der Medienleitung und dem zumindest einen Heizelement weg weist. Außenseitig wird das zumindest eine hochtemperaturfeste Folienelement über der Fixiereinrichtung, in adhäsiver Verbindung mit dieser angeordnet. Zur Positionsfixierung des zumindest einen Heizelements auf der Außenseite der rohrförmigen Medienleitung ist die zumindest eine Fixiereinrichtung vorgesehen, die vorteilhaft dem Verlauf des zumindest einen Heizelementes folgend über diesem angeordnet ist. Die zumindest eine Fixiereinrichtung wird auf dem Heizelement also in einer solchen Positionierung aufgebracht, dass die adhäsive Oberfläche bzw. Klebeschicht nach außen weg von dem Heizelement und der rohrförmigen Medienleitung gerichtet ist. Dementsprechend verklebt diese adhäsive Oberfläche bzw. Kleberschicht bzw. allgemein das Fixiermittel mit dem darüber angeordneten hochtemperaturfesten Folienelement und nicht mit dem Heizelement und/oder der rohrförmigen Medienleitung. Auch hierdurch kann sichergestellt werden, dass keinerlei Fixiermittel, wie Klebemittel, auf die Außenseite einer Isolierummantelung des zumindest einen Heizelementes und/oder die Außenseite der rohrförmigen Medienleitung gelangt.

Ferner ist es möglich, das zumindest eine hochtemperaturfeste Folienelement auf der Außenseite der rohrförmigen Medienleitung unter der Bewicklung von dieser mit dem zumindest einen Heizelement anzuordnen. Hierdurch kann ebenfalls ausgeschlossen werden, dass Fixiermittel, wie Klebemittel, der Fixiereinrichtung auf die Außenseite der rohrförmigen Medienleitung gelangt und zum Laserverschweißen der Medienleitung mit einem Leitungsverbinder erst mühsam von dort entfernt werden muss. Die Bewicklung der rohrförmigen Medienleitung mit dem zumindest einen Heizelement erfolgt über dem hochtemperaturfesten Folienelement. Die Fixierung der Positionierung des oder der Heizelement(e) kann durch eine Fixiereinrichtung in Form eines Klebe-, Gewebe- oder Gewebeklebebandes vorgesehen werden.

Grundsätzlich ist es möglich, nicht nur ein, sondern mehrere hochtemperaturfeste Folienelemente vorzusehen und sowohl unter als auch über der Bewicklung der rohrförmigen Medienleitung mit dem zumindest einen Heizelement anzuordnen.

Das Folienelement kann jeweils durch spiralförmiges Wickeln und/oder axial gefaltet eingezogen auf der rohrförmigen Medienleitung über oder unter der Heizelementbewicklung aufgebracht werden. Zum axial gefalteten Aufbringen kann ein Hilfsmittel verwendet werden, das ein seitliches Einfalten des Folienelements in dessen Axial- bzw. Längsrichtung ermöglicht, ähnlich wie für Kabelummantelungen durch einen sog. Tape Former der Firma TapeFormers.com, Leicester, England, bekannt. Das Folienelement kann ferner in einer Wendelwickelanlage auf die rohrförmige Medienleitung über oder unter dem zumindest einen Heizelement aufgebracht werden.

Das hochtemperaturfeste Folienelement kann axial eingefaltet auf rohrförmiger Medienleitung und dem zumindest einen Heizelement angeordnet und auf dem Folienelement die Fixiereinrichtung in Form eines eine adhäsive Oberfläche aufweisenden Bandes, wie eines Klebe-, Gewebe- oder Gewebeklebebandes, außen axial eingeführt werden, wobei es überlappend aufgebracht und mit dem Folienelement verklebt wird, mit einer Steigung in Längsrichtung von bis zu 60 mm. Das Aufbringen des zumindest einen Folienelementes auf der Außenseite der mit dem zumindest einen Heizelement versehenen rohrförmigen Medienleitung kann in der gleichen Station wie das Aufbringen der Fixiereinrichtung in sequentieller Abfolge erfolgen. Ebenfalls ist es möglich, das Folienelement in einer ersten Station aufzubringen und die Fixiereinrichtung in einer nachfolgenden zweiten Station.

Ferner ist eine Herstellung der beheizbaren Medienleitung in einem Endlosprozess möglich, wobei die rohrförmige Medienleitung auf einer Spule gewickelt vorgehalten und je nach Ausführungsvariante mit dem zumindest einen Heizelement, insbesondere in Form einer Heizlitze, und dem Folienelement sowie ggf. der Fixiereinrichtung versehen wird.

Das hochtemperaturfeste Folienelement besteht aus einem Polymermaterial, insbesondere Polyethylenterephthalat (PET). Polyethylenterephthalat hat dabei üblicherweise eine Betriebstemperatur von Ts ≤ 180 °C. In der Schmelze weist PET eine Temperatur von 250 °C auf. Das Vorsehen eines hochtemperaturfesten Folienelementes erweist sich bei den auftretenden Temperaturen einerseits im Betrieb einer konfektionierten beheizbaren Medienleitung und andererseits beim Formbiegen der konfektionierten beheizbaren Medienleitung als vorteilhaft, um die ausreichende Temperaturbeständigkeit aufzuweisen und ein Degenerieren des Folienelementes zu vermeiden. Die PET-Folie kann transparent und biaxial orientiert sein.

Das Folienelement kann beispielsweise eine Materialdicke von 20 µm und eine Schrumpfrate bei 150 °C von > 0,5 %, insbesondere > 1,5 %, vorzugsweise 2 % aufweisen. Für das Formbiegen wird üblicherweise die gesamte konfektionierte beheizbare Medienleitung in eine Beheizungseinrichtung, wie einen Ofen, eingelegt und darin erwärmt, insbesondere auf eine Temperatur von etwa 150 °C. Nachfolgend wird die konfektionierte beheizbare Medienleitung in die gewünschte Form gelegt bzw. eingelegt und hierin abgekühlt, um die eingestellte Formgebung zu stabilisieren.

Außer dem Schrumpfen während des Formbiegeprozesses der beheizbaren Medienleitung kann auch ein gesonderter Prozessschritt zum Schrumpfen des zumindest einen hochtemperaturfesten Folienelementes vorgesehen werden, beispielsweise um bei Weglassen einer zusätzlichen Fixiereinrichtung die Positionierung des oder der Heizelemente auf der Außenseite der rohrförmigen Medienleitung fixieren zu können. Das hochtemperaturfeste Folienelement ist dann nicht lose auf Heizelement und rohrförmiger Medienleitung angeordnet, sondern dort aufgeschrumpft und dementsprechend eng angelegt an die Außenseite des zumindest einen Heizelements, insbesondere von dessen Isolierummantelung, und der rohrförmigen Medienleitung.

Durch das hochtemperaturfeste Folienelement ist ein zusätzlicher äußerer Schutz gegen Durchscheuern sowohl für die mit einer Isolierummantelung versehenen Heizelemente als auch die rohrförmige Medienleitung möglich. Über die Auswahl der Materialdicke des hochtemperaturfesten Folienelementes und den Grad der Überlappung beim Bewickeln der rohrförmigen Medienleitung mit oder ohne darüber angeordneten Heizelement(en) kann die erzielbare Abriebfestigkeit eingestellt werden. Insbesondere ist das Folienelement jedoch bezüglich seiner Materialstärke dünner ausgebildet als die Fixiereinrichtung, insbesondere in Form eines mit adhäsiver Oberfläche versehenen Bandes, insbesondere eines Klebe-, Gewebe- oder Gewebeklebebandes. Die dennoch erzielbare Abriebfestigkeit sorgt dafür, dass im Betrieb die Fixierung des oder der Heizelemente auf der Außenseite der rohrförmigen Medienleitung nicht beispielsweise durch Scheuern eines zur außenseitigen Isolierung der beheizbaren Medienleitung vorgesehenen Hüllrohres, insbesondere Wellrohres, zerstört wird. Das zumindest eine hochtemperaturfeste Folienelement kann zum Erzielen einer Abriebfestigkeit insbesondere mit einer Überlappung von 0 bis 90 %, bevorzugt 0 bis 80 %, insbesondere 0 bis 50 %, gewickelt werden. Ferner ist es möglich, die Schrumpfrate des hochtemperaturfesten Folienelementes dahingehend anzupassen, dass eine ausreichende Materialstärke nach dem Schrumpfen verbleibt, um eine ausreichend Abriebfestigkeit auch bei einem auf dem Folienelement scheuernden Hüllrohr sicherzustellen.

Zum Verbinden der beheizbaren Medienleitung mit einem Leitungsverbinder, also zum Konfektionieren der Medienleitung, wird zunächst die, wie vorstehend beschrieben, auf einer Spule bevorratete rohrförmige Medienleitung mit Heizelement(en) und Folienelement(en) sowie ggf. Fixiereinrichtung versehen als beheizbare Medienleitung vorkonfektioniert, auf eine gewünschte Länge abgelängt, das Folienelement endseitig von der rohrförmigen Medienleitung entfernt, der Leitungsverbinder aufgefügt und durch insbesondere Laserschweißen dort befestigt. Das zumindest eine hochtemperaturfeste Folienelement kann zum erleichterten Entfernen mit einer Perforation im Bereich von Schnittkanten vorgesehen werden, um ein besseres manuelles Abtrennen eines Abschnitts des hochtemperaturfesten Folienelements im Endbereich bzw. an den Enden der rohrförmigen Medienleitung zu ermöglichen. Hierdurch kann das hochtemperaturfeste Folienelement schnell und unkompliziert im Endbereich der rohrförmigen Medienleitung entfernt werden. Selbstverständlich kann auch ein anderweitiges Abtrennen des zu entfernenden Abschnitts des Folienelements, wie z.B. durch Einschneiden und Abschneiden, vorgesehen werden. Das hochtemperaturfeste Folienelement lässt sich somit leicht händisch entfernen, wobei dies durch geeignete Wahl der Materialdicke und/oder Beschaffenheit des Folienelements und die genannte Perforation, insbesondere Zackenperforation, an den Schnittkanten bzw. Trennkanten des Folienelements unterstützt werden kann.

Somit ist es vorteilhaft möglich, ein hochtemperaturfestes Folienelement einerseits vorzusehen, um einen Übertrag von Fixiermittel, wie Klebemittel, von der zumindest einen Fixiereinrichtung insbesondere in Form eines mit einer adhäsiven Oberfläche versehenen Bandes, wie eines Klebe-, Gewebe- oder Gewebeklebebandes, auf die Außenseite der rohrförmigen Medienleitung und/oder die Außenseite der Heizelemente, insbesondere von deren außenseitiger Isolierummantelung, zu verhindern und andererseits das zumindest eine Heizelement auf der Außenseite der rohrförmigen Medienleitung zu fixieren, wobei im letzteren Falle das Vorsehen einer zusätzlichen Fixiereinrichtung insbesondere in Form eines Klebe-, Gewebe- oder Gewebeklebebandes entfallen kann. Dadurch, dass kein Fixiermittelübertrag, insbesondere Klebemittelübertrag, auf die Außenseite der rohrförmigen Medienleitung stattfindet, ist kein Reinigungsprozess erforderlich, was zu einer Kostenersparnis führt. Ferner können potentielle Leckagen durch undichte Laserschweißverbindungen vermieden werden, die ansonsten im Stand der Technik aufgrund von nicht vollständig von der Außenseite der rohrförmigen Medienleitung entfernten Fixiermittelresten, wie Kleberresten, auftreten können. Ein diesbezüglich geringerer Ausschuss führt ebenfalls zu einer Kostenersparnis gegenüber dem bislang praktizierten Verfahren des Entfernens von Fixiermittelresten, wie Kleberresten, von der Außenseite der rohrförmigen Medienleitung.

Zur näheren Erläuterung der Erfindung werden im Folgenden Ausführungsbeispiele von dieser näher anhand der Zeichnungen beschrieben. Diese zeigen in:
- Figur 1: eine Längsschnittansicht durch eine erfindungsgemäße beheizbare Medienleitung mit direkt auf der rohrförmigen Medienleitung aufgebrachtem erfindungsgemäßen hochtemperaturfesten Folienelement,
- Figur 2: eine Querschnittsansicht durch eine Ausführungsform einer nicht erfindungsgemäßen beheizbaren Medienleitung, wobei ein hochtemperaturfestes Folienelement außenseitig sowohl zwei Heizelemente als auch eine rohrförmige Medienleitung umgibt,
- Figur 3: eine Querschnittsansicht durch eine weitere Ausführungsform einer erfindungsgemäßen beheizbaren Medienleitung, wobei ein erfindungsgemäßes hochtemperaturfestes Folienelement außenseitig auf rohrförmiger Medienleitung und auf dieser aufgewickelten Heizelementen angeordnet ist, außenseitig umwickelt von einer Fixiereinrichtung in Form eines Klebebandes,

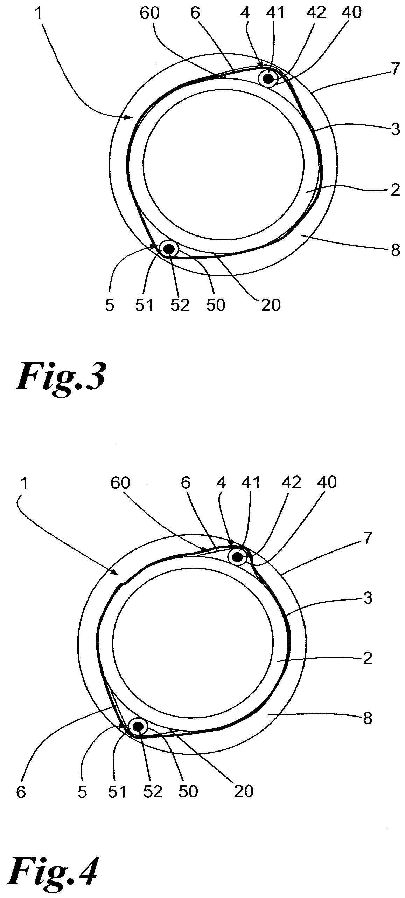

- Figur 4: eine Querschnittsansicht durch eine weitere Ausführungsvariante einer erfindungsgemäßen beheizbaren Medienleitung, bei der eine rohrförmige Medienleitung mit außenseitiger Bewicklung mit zwei Heizelementen vorgesehen ist, wobei die beiden Heizelemente durch eine Fixiereinrichtung in Form eines Klebebandes bezüglich ihrer Positionierung auf der rohrförmigen Medienleitung fixiert sind, wobei die Kleberschicht des Klebebandes nach außen weg von der rohrförmigen Medienleitung weist und wobei ein erfindungsgemäßes hochtemperaturfestes Folienelement außenseitig über dem Klebeband angeordnet ist, und
- Figur 5: eine Skizze einer Aufbereitung eines Endes einer erfindungsgemäßen beheizbaren Medienleitung, um dieses für das Konfektionieren mit einem Leitungsverbinder vorzubereiten.

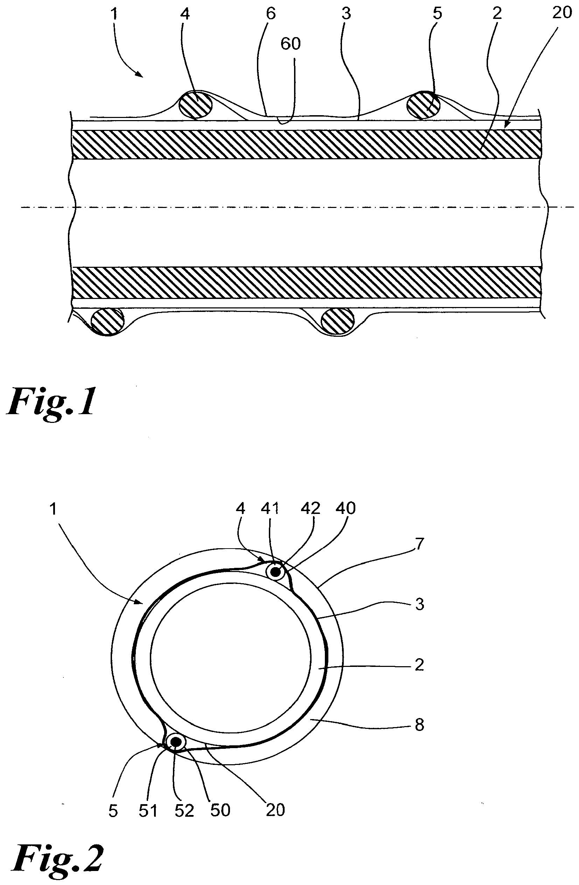

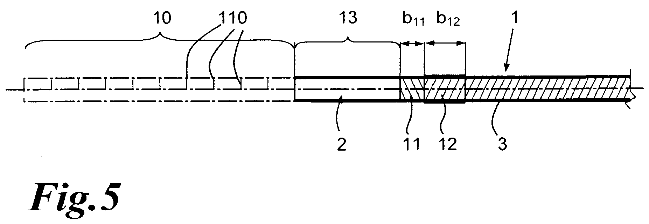

Figur 1 zeigt einen Ausschnitt einer beheizbaren Medienleitung 1, die eine rohrförmige Medienleitung 2 umfasst. Die rohrförmige Medienleitung 2 umgebend ist ein hochtemperaturfestes Folienelement 3 angeordnet. Dieses kann axial eingefaltet eingezogen oder spiralförmig um die rohrförmige Medienleitung herum gewickelt sein. Über dem Folienelement sind zwei Heizelemente 4,5 spiralförmig gewickelt angeordnet. Um diese Position zu fixieren, ist ferner außenseitig über den Heizelementen 4,5 eine Fixiereinrichtung 6 angeordnet, die in Form eines Klebe-, Gewebe- oder Gewebeklebebandes ausgebildet ist. Die Fixiereinrichtung 6 ist mit ihrer Klebeseite, also ihrer adhäsiven Oberfläche 60, in Richtung des Folienelements 3 sowie der jeweiligen Außenseite der Heizelemente 4,5 angeordnet und mit diesen verklebt. Durch das Anordnen des hochtemperaturfesten Folienelementes 3 in Überdeckung der rohrförmigen Medienleitung 2 gelangt die adhäsive Oberfläche bzw. das Klebemittel der Fixiereinrichtung 6 nicht auf die Außenseite 20 der rohrförmigen Medienleitung. Dementsprechend ist es nach Ablängen der beheizbaren Medienleitung 1 in einer gewünschten Länge, um diese mit Leitungsverbindern, wie beispielsweise Steckverbindern, konfektionieren zu können, möglich, diese ohne eine Nachbearbeitung zum Entfernen von Kleberresten von der Oberfläche bzw. der Außenseite 20 der rohrförmigen Medienleitung 2 an den Enden von dieser z.B. durch Laserschweißen anzubringen. Figur 5 ist eine abgelängte beheizbare Medienleitung 1 zu entnehmen, auf deren weitere Konfektionierung nachstehend noch näher eingegangen wird.

Derartige Reste von Fixiermittel, hier Kleberreste, verbleiben üblicherweise nach dem Abziehen der Fixiereinrichtung 6 auf der Außenseite 20 der rohrförmigen Medienleitung 2, wenn die Fixiereinrichtung 6 mit ihrer adhäsiven Oberfläche 60 direkt mit der Außenseite 20 der rohrförmigen Medienleitung 2 verklebt wird. Dies wird durch das Zwischenfügen des hochtemperaturfesten Folienelementes 3 zwischen die Fixiereinrichtung 6 und die Außenseite 20 der rohrförmigen Medienleitung 2 jedoch vermieden. Dementsprechend ist zum Konfektionieren der beheizbaren Medienleitung 1 es lediglich erforderlich, das hochtemperaturfeste Folienelement 3 zu entfernen, da hiermit auch das darauf befestigte Klebeband bzw. die Fixiereinrichtung 6 mit abgezogen wird. Die beiden Heizelemente 4,5 können dort dann mit elektrischen Zuleitungen verbunden werden, um diese an eine Energiequelle anschließen zu können bzw. können dort mit anderen Heizelementen, die beispielsweise einen Leitungsverbinder umgeben, verbunden werden, insbesondere durch Crimpen.

Das hochtemperaturfeste Folienelement 3 kann beispielsweise durch eine Wendelwickelanlage auf die rohrförmige Medienleitung 2 aufgebracht werden. Um ein späteres Formbiegen der konfektionierten beheizbaren Medienleitung oder auch bereits beheizbaren Medienleitung ertragen zu können, ist das Folienelement 3 hochtemperaturfest, besteht also aus einem Material, das für hohe Temperaturen, wie insbesondere Temperaturen von über 100°C geeignet ist. Beim Formbiegen wird die Leitung in einem Ofen auf eine Temperatur von etwa 150°C erwärmt, in Form gelegt und nachfolgend abgekühlt, so dass sich hier insbesondere Materialien für das Folienelement eignen, die diese Temperaturen ertragen. Das hochtemperaturfeste Folienelement kann dementsprechend beispielsweise aus PET, also Polyethylenterephthalat, oder PP, also Polypropylen, bestehen. Es kann insbesondere eine Materialdicke von 20 µm und einer Schrumpfrate von mehr als 0,5%, insbesondere mehr als 1,5%, vorzugweise 2%, bei 150°C aufweisen.

In der Figur 2 ist eine Ausführungsvariante der beheizbaren Medienleitung 1 gezeigt, die hier bereits von einem Hüllrohr 7 außenseitig umgeben ist. Das Hüllrohr 7 kann insbesondere als Wellrohr ausgebildet sein. Es dient dem außenseitigen Isolieren der beheizbaren Medienleitung, wobei zu diesem Zweck ein Luftvolumen 8 zwischen der beheizbaren Medienleitung 1 und dem Hüllrohr 7 eingeschlossen ist, das der Isolation dient. Bei der in Figur 2 gezeigten Ausführungsvariante ist das hochtemperaturfeste Folienelement 3 über den Heizelementen 4, 5, die ihrerseits die rohrförmige Medienleitung 2 umgebend angeordnet sind, angeordnet. Bei der Herstellung der beheizbaren Medienleitung 1 sind somit zunächst die rohrförmige Medienleitung 2 mit den beiden Heizelementen 4, 5 bewickelt und nachfolgend das hochtemperaturfeste Folienelement 3 außenseitig auf die mit den beiden Heizelementen 4,5 umwickelte rohrförmige Medienleitung 2 aufgebracht. Insbesondere wird das Folienelement 3 hierbei spiralförmig gewickelt so eng anliegend aufgebracht, dass die bei der Bewicklung der rohrförmigen Medienleitung 2 mit den beiden Heizelementen 4,5 für diese vorgegebene Positionierung durch das Folienelement 3 fixiert werden kann. Das hochtemperaturfeste Folienelement 3 dient bei der Ausführungsvariante nach Figur 2 somit als Fixiereinrichtung, so dass eine zusätzliche Fixiereinrichtung insbesondere in Form eines Klebebandes hier entfallen kann.

Bei der in Figur 3 gezeigten Ausführungsvariante der beheizbaren Medienleitung 1 ist wiederum das hochtemperaturfeste Folienelement 3 außenseitig auf der mit den beiden Heizelementen 4,5 außenseitig bewickelten rohrförmigen Medienleitung 2 angeordnet. Insbesondere ist das Folienelement 3 dabei lose als die Heizelemente 4 und 5 sowie die rohrförmige Medienleitung 2 überdeckend angeordnet. Das Folienelement 3 kann wiederum entweder spiralförmig gewickelt oder axial gefaltet eingezogen auf der Außenseite der Heizelemente 4,5 und der rohrförmigen Medienleitung 2 angeordnet sein. Außenseitig das hochtemperaturfeste Folienelement 3 zumindest teilweise umgebend ist die Fixiereinrichtung 6 insbesondere in Form eines Klebe-, Gewebe- oder Gewebeklebebandes aufgebracht, wobei die adhäsive Oberfläche 60 der Fixiereinrichtung 6 in Richtung des hochtemperaturfesten Folienelements 3 weist und mit diesem adhäsiv verbunden bzw. verklebt ist. Auch bei dieser Ausführungsvariante ist es möglich, dass die adhäsive Oberfläche 60 der Fixiereinrichtung 6 die Außenseite 20 der rohrförmigen Medienleitung 2 und hier ebenfalls die jeweilige Außenseite 40,50 der beiden Heizelemente 4,5 nicht berührt. Die beiden Heizelemente 4,5 weisen jeweils eine Isolationsummantelung 41 bzw. 51 auf, die eine innere Heizlitze 42,52 außenseitig umgibt. Dementsprechend liegt das hochtemperaturfeste Folienelement 3 auf der Außenseite 40 bzw. 50 der beiden Heizelemente 4,5 und auf der Außenseite 20 der rohrförmigen Medienleitung 2 an.

Als Variation zu der in Figur 3 gezeigten Ausführungsvariante kann weiterhin das hochtemperaturfeste Folienelement 3 außenseitig auf der rohrförmigen Medienleitung und den beiden Heizelementen 4,5 axial gefaltet eingezogen angeordnet sein. Die insbesondere in Form eines Klebebandes oder Gewebebandes oder Gewebeklebebandes ausgebildete Fixiereinrichtung 6 kann ferner außenseitig axial eingeführt und in Längsrichtung der rohrförmigen Medienleitung 2 mit einer Steigung von bis zu 60 mm mit dem hochtemperaturfesten Folienelement 3 verklebt sein. Das Folienelement wird hierbei zunächst axial gefaltet eingezogen und auf der Außenseite der mit den Heizelementen 4,5 bewickelten rohrförmigen Medienleitung angeordnet und nachfolgend überlappend die Fixiereinrichtung insbesondere in Form eines mit zumindest einer adhäsiven Oberfläche 60 versehenen Bandes überlappend mit der genannten Steigung gewickelt. Das Aufbringen des hochtemperaturfesten Folienelementes 3 und der Fixiereinrichtung 6 kann sequentiell nacheinander in ein und derselben Fertigungsstation oder in zwei nacheinander folgenden Stationen erfolgen.

Über die Materialdicke des hochtemperaturfesten Folienelementes und den Grat der Überlappung beim Bewickeln kann die Abriebfestigkeit eingestellt werden. Das hochtemperaturfeste Folienelement 3 bildet je nach der Dicke der Aufbringung über den Heizelementen 4,5 einen außenseitigen Schutz für diese in Bezug auf eine durch das Hüllrohr 7 gegebenenfalls erfolgende scheuernde Berührung der jeweiligen Isolationsummantelung 41 bzw. 51 der beiden Heizelemente 4,5. Gerade bei Schwingungen im Fahrzeugraum kann es zu einer Relativbewegung zwischen Hüllrohr 7 und der beheizbaren Medienleitung 1 bzw. deren Heizelementen 4,5 kommen, wodurch bei einer starken Beschädigung der Isolationsummantelung 41 bzw. 51 der beiden Heizelemente 4,5 es zu einem kurzschlussbedingten Ausfall der Beheizung der beheizbaren Medienleitung kommen kann. Durch das Aufbringen des hochtemperaturfesten Folienelementes 3 auf der Außenseite der jeweiligen Heizelemente 4, 5, also deren Isolationsummantelung 41 bzw. 51 außenseitig umgebend, können diese gegen Abrieb und somit Beschädigung geschützt werden, so dass ein noch sichererer Betrieb der Beheizung der beheizbaren Medienleitung 1 ermöglicht wird.

Figur 4 zeigt eine weitere Ausführungsvariante der beheizbaren Medienleitung 1, bei der die rohrförmige Medienleitung 2 zunächst mit den beiden Heizelementen 4,5 außenseitig bewickelt ist. Zum Fixieren der Positionierung der Heizelemente 4,5 auf der Außenseite der rohrförmigen Medienleitung 2 ist die Fixiereinrichtung 6 insbesondere entlang den beiden Heizelementen 4,5 sich erstreckend angeordnet. Um zu vermeiden, dass Fixiermittel bzw. insbesondere Klebemittel auf die Außenseite insbesondere der rohrförmigen Medienleitung 2 gelangt, ist die adhäsive Oberfläche 60 der Fixiereinrichtung 6 in Richtung weg von der rohrförmigen Medienleitung 2 bzw. deren Außenseite 20 gerichtet. Die adhäsive Oberfläche 60 der Fixiereinrichtung 6 ist mit dem hochtemperaturfesten Folienelement 3 verklebt, das außenseitig über dieser aufgebracht ist. Das hochtemperaturfeste Folienelement 3 kann sich sowohl über der Fixiereinrichtung 6 als auch den Bereichen der Außenseite 20 der rohrförmigen Medienleitung 2 erstrecken, die nicht mit der Fixiereinrichtung 6 bewickelt bzw. versehen sind. Da die adhäsive Oberfläche 60 der Fixiereinrichtung 6 nicht in Richtung der Außenseite 20 der rohrförmigen Medienleitung 2 gerichtet ist, sondern weg von dieser, kann wiederum erfolgreich ein Aufbringen von Klebemitteln auf die Außenseite 20 der rohrförmigen Medienleitung 2 und auch auf die jeweilige Außenseite 40 bzw. 50 der beiden Heizelemente 4,5 bzw. von deren Isolationsummantelung 41 bzw. 51 sicher vermieden werden. Dementsprechend ist auch hier ein Entfernen der auf der Außenseite 20 der rohrförmigen Medienleitung 2 angeordneten Fixiereinrichtung 6 und des hochtemperaturfesten Folienelements 3 ohne weiteres und ohne Rückstände von Fixier- bzw. Klebemitteln auf der Außenseite 20 der rohrförmigen Medienleitung 2 möglich. Auch bei dieser Ausführungsvariante ist es wiederum möglich, eine Perforation, insbesondere eine Zackenperforation, an den Schnittkanten des Folienelementes 3 vorzusehen, um das Folienelement leichter manuell abtrennen und von der Außenseite der rohrförmigen Medienleitung 2 entfernen zu können, um diese insbesondere durch Laserschweißen mit einem Leitungsverbinder verbinden zu können.

Auch bei der in Figur 4 gezeigten Ausführungsvariante ist wiederum außenseitig um die beheizbare Medienleitung 1 herum das Hüllrohr 7, das das Luftvolumen 8 zwischen der Außenseite der beheizbaren Medienleitung 1 und dem Hüllrohr 7 einschließt zur außenseitigen Isolierung der beheizbaren Medienleitung vorgesehen. Das Hüllrohr 7 wird beim Konfektionieren der Medienleitung vorteilhaft auf dieser mit aufgebracht, kann auf diese axial aufgeschoben oder bei Vorsehen eines geschlitzten Hüllrohres radial aufgebracht werden.

Die Herstellung der beheizbaren Medienleitung kann in einem Endlosprozess erfolgen, wobei die rohrförmige Medienleitung 2 von einer Bevorratungsspule abgewickelt und je nach gewünschter Ausführungsvariante mit den Heizelementen 4,5 sowie dem hochtemperaturfesten Folienelement 3 und ggf. der Fixiereinrichtung 6 versehen bzw. umwickelt wird. Nach dem Ablängen der so vorbereiteten beheizbaren Medienleitung 1 in der gewünschten Länge wird zum Verbinden der beheizbaren Medienleitung 1 mit einem Leitungsverbinder ein endseitiger Abschnitt der beheizbaren Medienleitung bis zur Außenseite 20 der rohrförmigen Medienleitung 2 freigelegt, also Folienelement 3 und Fixiereinrichtung 6 dort entfernt und auch die Heizelemente 4,5 von dort abgewickelt, um nachfolgend eine insbesondere Laserschweißverbindung mit dem Leitungsverbinder vorsehen zu können. Dies ist in Figur 5 zu sehen. Gestrichelt dargestellt ist in Figur 5 hierbei die abgetrennte Überlänge 10 der rohrförmigen Medienleitung. Diese kann unterschiedlich sein, in Abhängigkeit vom jeweiligen Anwendungsfall. Der Abschnitt 10 ist daher mit einer Anzahl von gestrichelt dargestellten Längsunterteilungen 110 versehen, um dieses anzudeuten, an denen ein Trennen erfolgen könnte bzw. die die dann jeweils vorgesehene Überlänge veranschaulichen. Gezeigt ist ferner die freigelegte rohrförmige Medienleitung 2. Auf dieser ist zum Fixieren des Endes des abgewickelten Folienelementes 3 und der teilabgewickelten Heizelemente 4, 5 ein erstes adhäsives Fixierband 11 durch Umwickeln aufgebracht. Dieses ist auf dem Folienelement 3 mit darunter angeordneten Heizelementen 4, 5, die auf der rohrförmigen Medienleitung 2 aufliegen, angeordnet. Direkt benachbart zu dem ersten adhäsiven Fixierband 11 ist ein zweites adhäsives Fixierband 12 außenseitig auf dem Folienelement 3 durch Umwickeln aufgebracht. Das zweite adhäsive Fixierband 12 ist breiter ausgebildet als das erste adhäsive Fixierband 11. Beispielsweise weist das erste adhäsive Fixierband 11 eine Breite b₁₁ von 9 mm +/- 1 mm auf, während das zweite adhäsive Fixierband 12 eine Breite von b₁₂ von 15 mm +/- 1 mm aufweisen kann. Selbstverständlich sind auch andere Abmessungen der Fixierbänder 11 und 12 möglich. Beide Fixerbänder können als Klebe-, Gewebeklebe- oder Gewebebänder ausgebildet sein. Beide dienen zur Refixierung des Folienelementes 3, also zum Verhindern eines ungewollten Lockerns und Ablösens (Flagging) des Endes des Folienelementes neben dem freigelegten Abschnitt 13 der rohrförmigen Medienleitung 2, der nachfolgend insbesondere durch Laserschweißen mit einem Leitungsverbinder verbunden werden kann.

Anstelle der beiden in Figur 5 gezeigten adhäsiven Fixierbänder 11, 12 kann auch lediglich das zweite adhäsive Fixerband 12 vorgesehen werden, wenn dieses bereits eine ausreichende Fixierung des Endes des Folienelementes 3 nach dem Ablängen der beheizbaren Medienleitung und Freilegen der rohrförmigen Medienleitung 2 ermöglicht.

Die beiden adhäsiven Fixierbänder 11, 12 können mehrfach um die Außenseite der mit Heizelementen 4, 5 und Folienelement 3 versehenen rohrförmigen Medienleitung gewickelt, somit an den jeweiligen Anordnungsstellen gebündelt aufgebracht werden. Die beiden adhäsiven Fixierbänder 11, 12 können im Wesentlichen ohne Abstand nebeneinander in Längsrichtung der beheizbaren Medienleitung aufgebracht werden, wobei zwischen ihnen ebenfalls ein geringer Spalt vorgesehen werden kann. Insbesondere beträgt der Abstand zwischen den beiden adhäsiven Fixierbändern 0 mm +/- 2,5 mm. Es kann somit auch eine geringfügige Überdeckung der beiden adhäsiven Fixierbänder in Längsrichtung der beheizbaren Medienleitung vorgesehen werden.

Zum Formbiegen der insbesondere konfektionierten beheizbaren Medienleitung wird diese erwärmt, insbesondere in einem Ofen, und in einer Form in die gewünschte Form gebogen, in dieser Form abgekühlt und der Form wieder entnommen. Die Erwärmung zum Formbiegen erfolgt auf eine Temperatur von etwa 150°C.

Neben den im Vorstehenden beschriebenen und in den Figuren gezeigten Ausführungsvarianten einer beheizbaren Medienleitung sowie eines Verfahrens zum Herstellen einer solchen beheizbaren Medienleitung und einer konfektionierten Medienleitung, die eine solche beheizbare Medienleitung umfasst, können noch zahlreiche weitere Ausführungsvarianten gebildet werden.

### Bezugszeichenliste

- 1: beheizbare Medienleitung
- 2: rohrförmige Medienleitung
- 3: hochtemperaturfestes Folienelement
- 4: Heizelement
- 5: Heizelement
- 6: Fixiereinrichtung
- 7: Hüllrohr
- 8: Luftvolumen
- 10: Überlänge von 2
- 11: erstes abhäsives Fixierband
- 12: zweites adhäsives Fixierband
- 13: Abschnitt von 2
- 20: Außenseite von 2
- 40: Außenseite
- 41: Isolationsummantelung
- 42: Heizlitze
- 50: Außenseite
- 51: Isolationsummantelung
- 52: Heizlitze
- 60: adhäsive Oberfläche
- 110: Längsunterteilungen

## Patentansprüche

1. Beheizbare Medienleitung (1) mit einer rohrförmigen Medienleitung (2), zumindest einem Heizelement (4, 5), das in außenseitiger Anordnung um die rohrförmige Medienleitung (2) gewickelt ist, und zumindest einer Fixiereinrichtung zum Fixieren der Position des zumindest einen Heizelements (4, 5) auf der Außenseite (20) der rohrförmigen Medienleitung (2),
wobei
auf der Außenseite (20) der rohrförmigen Medienleitung (2) zumindest ein hochtemperaturfestes Folienelement (3) bestehend aus Polymermaterial, das beschädigungsfrei Temperaturen von 150 °C und mehr aussetzbar ist, über und/oder unter der Bewicklung der rohrförmigen Medienleitung (2) mit dem zumindest einen Heizelement (4, 5) vorgesehen ist zum Verhindern eines Anhaftens von adhäsivem Fixiermittel der Fixiereinrichtung auf der Außenseite (20) der rohrförmigen Medienleitung (2), und/oder auf der Außenseite des zumindest einen Heizelements (4, 5).

2. Beheizbare Medienleitung (1) nach Anspruch 1,
**dadurch gekennzeichnet, dass**
die zumindest eine Fixiereinrichtung (6) als zumindest eine adhäsive Oberfläche (60) aufweisendes Band, insbesondere Klebe-, Gewebe- oder Gewebeklebeband, ausgebildet und über dem hochtemperaturfesten Folienelement (3) angeordnet ist.

3. Beheizbare Medienleitung (1) nach Anspruch 1,
**dadurch gekennzeichnet, dass**
das hochtemperaturfeste Folienelement (3) auf der Außenseite (20) der rohrförmigen Medienleitung (2) unter der Bewicklung von dieser mit dem zumindest einen Heizelement (4, 5) angeordnet ist.

4. Beheizbare Medienleitung (1) nach Anspruch 1,
**dadurch gekennzeichnet, dass**
die zumindest eine Fixiereinrichtung (6) mit einer adhäsiven Oberfläche (60) versehen und auf der Außenseite (20) der mit dem zumindest einen Heizelement (4, 5) bewickelten Medienleitung (2) so angeordnet ist, dass die adhäsive Oberfläche (60) von der Medienleitung (2) und dem zumindest einen Heizelement (4, 5) weg weist.

5. Beheizbare Medienleitung (1) nach Anspruch 4,
**dadurch gekennzeichnet, dass**
das zumindest eine hochtemperaturfeste Folienelement (3) außenseitig über der Fixiereinrichtung (6) angeordnet und mit dieser adhäsiv verbunden ist.

6. Beheizbare Medienleitung (1) nach einem der vorstehenden Ansprüche,
**dadurch gekennzeichnet, dass**
das hochtemperaturfeste Folienelement (3) bezüglich seiner Materialstärke dünner ausgebildet ist als die Fixiereinrichtung (6), insbesondere in Form eines mit adhäsiver Oberfläche (60) versehenen Bandes, insbesondere Klebe-, Gewebe- oder Gewebeklebebandes.

7. Beheizbare Medienleitung (1) nach einem der vorstehenden Ansprüche,
**dadurch gekennzeichnet, dass**
endseitig oder endseitig und im mittleren Bereich der mit dem zumindest einen Heizelement (4, 5) und dem zumindest einen hochtemperaturfesten Folienelement (3) versehenen rohrförmigen Medienleitung (2) eine Fixierung des hochtemperaturfesten Folienelements (3) durch zumindest ein adhäsives Fixierband (11, 12) vorgesehen ist.

8. Konfektionierte Medienleitung mit zumindest einer Medienleitung (1) nach einem der vorstehenden Ansprüche und mit zumindest einem endseitig mit dieser verbundenen Leitungsverbinder.

9. Verfahren zum Herstellen einer beheizbaren Medienleitung (1) nach einem der Ansprüche 1 bis 7, wobei die zumindest eine rohrförmige Medienleitung (2) mit dem zumindest einen Heizelement (4, 5) außenseitig bewickelt wird, wobei
auf der Außenseite (20) der rohrförmigen Medienleitung (2) über und/oder unter der Bewicklung von dieser mit dem zumindest einen Heizelement (4, 5) zumindest ein hochtemperaturfestes Folienelement (3), das beschädigungsfrei Temperaturen von 150 °C und mehr aussetzbar ist, aufgebracht wird.

10. Verfahren nach Anspruch 9,
**dadurch gekennzeichnet, dass**
das hochtemperaturfeste Folienelement (3) durch spiralförmiges Wickeln und/oder axial gefaltet eingezogen auf der rohrförmigen Medienleitung (2) über oder unter der Heizelementbewicklung (4, 5) aufgebracht wird.

11. Verfahren nach Anspruch 9 oder 10,
**dadurch gekennzeichnet, dass**
zum Konfektionieren der beheizbaren Medienleitung (1) die mit Heizelement(en) (4, 5) und hochtemperaturfestem Folienelement (3) vorkonfektionierte Medienleitung abgelängt, das hochtemperaturfeste Folienelement (3) in zumindest einem vorgebbaren Abschnitt durch zumindest ein adhäsives Fixierband (11, 12) gegen ein Lockern und/oder Ablösen gesichert, das hochtemperaturfeste Folienelement (3) endseitig bis zu dem adhäsiven Fixierband (11, 12) entfernt und das zumindest eine Heizelement (4, 5) freigelegt und bis zum adhäsiven Fixierband (11, 12) rückgewickelt wird.

12. Verfahren nach Anspruch 11,
**dadurch gekennzeichnet, dass**
in einem endseitigen Bereich und in einem mittleren Bereich der beheizbaren Medienleitung (1) das zumindest eine adhäsive Fixierband (11, 12) zum Verhindern eines Lockerns und/oder Ablösens des hochtemperarturfesten Folienelements (3) auf dieses aufgebracht wird.

13. Verfahren nach Anspruch 11 oder 12,
**dadurch gekennzeichnet, dass**
zwei adhäsive Fixierbänder (11, 12) in Längsrichtung der beheizbaren Medienleitung (1) nebeneinander, insbesondere mit Abstand nebeneinander oder überlappend, aufgebracht werden.

## Claims

1. Heatable media line (1) having a tubular media line (2), at least one heating element (4, 5), which is wound around the tubular media line (2) in an external arrangement, and at least one fixing means for fixing the position of the at least one heating element (4, 5) on the outside (20) of the tubular media line (2),
wherein
at least one high-temperature-resistant film element (3) consisting of polymer material, which can be exposed to temperatures of 150°C or more without being damaged, is provided on the outside (20) of the tubular media line (2) over and/or under the at least one heating element (4, 5) wound around the tubular media line (2), in order to prevent adhesive fixing agent of the fixing means from sticking to the outside (20) of the tubular media line (2) and/or to the outside of the at least one heating element (4, 5).

2. Heatable media line (1) according to claim 1,
**characterised in that**
the at least one fixing means (6) is in the form of a tape having at least one adhesive surface (60), in particular an adhesive tape, cloth tape or cloth adhesive tape, and is arranged over the high-temperature-resistant film element (3).

3. Heatable media line (1) according to claim 1,
**characterised in that**
the high-temperature-resistant film element (3) is arranged on the outside (20) of the tubular media line (2) under the at least one heating element (4, 5) wound around said tubular media line.

4. Heatable media line (1) according to claim 1,
**characterised in that**
the at least one fixing means (6) is provided with an adhesive surface (60) and is so arranged on the outside (20) of the media line (2) around which the at least one heating element (4, 5) is wound that the adhesive surface (60) faces away from the media line (2) and the at least one heating element (4, 5).

5. Heatable media line (1) according to claim 4,
**characterised in that**
the at least one high-temperature-resistant film element (3) is arranged externally over the fixing means (6) and is adhesively bonded thereto.

6. Heatable media line (1) according to any one of the preceding claims,
**characterised in that**
the high-temperature-resistant film element (3) is thinner in respect of its material thickness than the fixing means (6), in particular is in the form of a tape provided with an adhesive surface (60), in particular an adhesive tape, cloth tape or cloth adhesive tape.

7. Heatable media line (1) according to any one of the preceding claims,
**characterised in that**
fixing of the high-temperature-resistant film element (3) by means of at least one adhesive fixing tape (11, 12) is provided at the end or at the end and in the middle region of the tubular media line (2) provided with the at least one heating element (4, 5) and with the at least one high-temperature-resistant film element (3).

8. Prefabricated media line having at least one media line (1) according to any one of the preceding claims and having at least one line connector connected thereto at the end.

9. Method for producing a heatable media line (1) according to any one of claims 1 to 7, wherein the at least one heating element (4, 5) is wound externally around the at least one tubular media line (2),
wherein
at least one high-temperature-resistant film element (3), which can be subjected to temperatures of 150°C or more without being damaged, is applied to the outside (20) of the tubular media line (2) over and/or under the at least one heating element (4, 5) wound around said tubular media line.

10. Method according to claim 9,
**characterised in that**
the high-temperature-resistant film element (3) is applied to the tubular media line (2) over or under the heating element winding (4, 5) by spiral winding and/or in such a manner that it is pulled in in an axially convoluted manner.

11. Method according to claim 9 or 10,
**characterised in that**
for prefabricating the heatable media line (1), the media line prefabricated with the heating element(s) (4, 5) and the high-temperature-resistant film element (3) is cut to length, the high-temperature-resistant film element (3) is secured against loosening and/or becoming detached in at least one specifiable portion by means of at least one adhesive fixing tape (11, 12), the high-temperature-resistant film element (3) is removed at the end as far as the adhesive fixing tape (11, 12), and the at least one heating element (4, 5) is exposed and wound back as far as the adhesive fixing tape (11, 12).

12. Method according to claim 11,
**characterised in that**
in an end region and in a middle region of the heatable media line (1), the at least one adhesive fixing tape (11, 12) is applied to the high-temperature-resistant film element (3) in order to prevent the high-temperature-resistant film element from loosening and/or becoming detached.

13. Method according to claim 11 or 12,
**characterised in that**
two adhesive fixing tapes (11, 12) are applied side by side in the longitudinal direction of the heatable media line (1), in particular side by side and spaced apart from one another or overlapping.

## Revendications

1. Conduite de fluide (1) chauffante avec une conduite de fluide (2) tubulaire, au moins un élément chauffant (4, 5), qui est enroulé en disposition côté extérieur autour de la conduite de fluide (2) tubulaire, et au moins un dispositif de fixation pour la fixation de la position de l'au moins un élément chauffant (4, 5) sur le côté extérieur (20) de la conduite de fluide (2) tubulaire,
dans laquelle sur le côté extérieur (20) de la conduite de fluide (2) tubulaire au moins un élément de film résistant aux hautes températures (3) constitué de matériau polymère, qui peut être exposé sans dommage à des températures de 150 °C et plus, est prévu au-dessus de et/ou au-dessous de l'enroulement de la conduite de fluide (2) tubulaire avec l'au moins un élément chauffant (4, 5) pour empêcher l'agent fixateur adhésif du dispositif de fixation d'adhérer au côté extérieur (20) de la conduite de fluide (2) tubulaire, et/ou au côté extérieur de l'au moins un élément chauffant (4, 5).

2. Conduite de fluide (1) chauffante selon la revendication 1,
**caractérisée en ce que**
l'au moins un dispositif de fixation (6) est réalisé en tant que bande, en particulier bande adhésive, de tissu ou adhésive de tissu, présentant au moins une surface adhésive (60) et disposé au-dessus de l'élément de film résistant aux hautes températures (3).

3. Conduite de fluide (1) chauffante selon la revendication 1,
**caractérisée en ce que**
l'élément de film résistant aux hautes températures (3) est disposé sur le côté extérieur (20) de la conduite de fluide (2) tubulaire au-dessous de l'enroulement de celle-ci avec l'au moins un élément chauffant (4, 5).

4. Conduite de fluide (1) chauffante selon la revendication 1,
**caractérisée en ce que**
l'au moins un dispositif de fixation (6) est pourvu d'une surface adhésive (60) et disposé sur le côté extérieur (20) de la conduite de fluide (2) enroulée avec l'au moins un élément chauffant (4, 5), de sorte que la surface adhésive (60) est orientée dans la direction opposée à la conduite de fluide (2) et à l'au moins un élément chauffant (4, 5).

5. Conduite de fluide (1) chauffante selon la revendication 4,
**caractérisée en ce que**
l'au moins un élément de film résistant aux hautes températures (3) est disposé côté extérieur au-dessus du dispositif de fixation (6) et relié à celui-ci de manière adhésive.

6. Conduite de fluide (1) chauffante selon l'une quelconque des revendications précédentes,
**caractérisée en ce que**
l'élément de film résistant aux hautes températures (3) est réalisé en ce qui concerne son épaisseur de matériau de manière plus mince que le dispositif de fixation (6), en particulier sous forme d'une bande, en particulier bande adhésive, de tissu ou adhésive de tissu, pourvue d'une surface adhésive (60).

7. Conduite de fluide chauffante (1) selon l'une quelconque des revendications précédentes,
**caractérisée en ce que**
côté extrémité ou côté extrémité et dans la zone centrale de la conduite de fluide (2) tubulaire pourvue de l'au moins un élément chauffant (4, 5) et de l'au moins un élément de film résistant aux hautes températures (3) une fixation de l'élément de film résistant aux hautes températures (3) par au moins une bande de fixation adhésive (11, 12) est prévue.

8. Ensemble de conduite de fluide avec au moins une conduite de fluide (1) selon l'une quelconque des revendications précédentes et avec au moins un raccord de conduites relié côté extrémité à celle-ci.

9. Procédé pour la fabrication d'une conduite de fluide (2) chauffante selon l'une quelconque des revendications 1 à 7, dans lequel l'au moins une conduite de fluide (2) tubulaire est enroulée côté extérieur avec l'au moins un élément chauffant (4, 5), dans lequel sur le côté extérieur (20) de la conduite de fluide (2) tubulaire au moins un élément de film résistant aux hautes températures (3), qui peut être exposé sans dommage à des températures de 150 °C et plus, est appliqué au-dessus et/ou au-dessous de l'enroulement de celui-ci avec l'au moins un élément chauffant (4, 5).

10. Procédé selon la revendication 9,
**caractérisé en ce que**
l'élément de film résistant aux hautes températures (3) est appliqué par enroulement en spirale et/ou de manière pliée tirée axialement vers l'intérieur sur la conduite de fluide (2) tubulaire au-dessus ou au-dessous de l'enroulement d'élément chauffant (4, 5).

11. Procédé selon la revendication 9 ou 10,
**caractérisé en ce que**
pour l'assemblage de la conduite de fluide (2) chauffante la conduite de fluide pré-assemblée avec les éléments chauffants (4, 5) et l'élément de film résistant aux hautes températures (3) est mise à la longueur, l'élément de film résistant aux hautes températures (3) dans au moins une partie pouvant être prédéfinie est empêché de se desserrer et/ou de se détacher par au moins une bande de fixation adhésive (11, 12), l'élément de film résistant aux hautes températures (3) est enlevé côté extrémité jusqu'à la bande de fixation adhésive (11, 12) et l'au moins un élément chauffant (4, 5) est mis à nu et rebobiné jusqu'à la bande de fixation adhésive (11, 12).

12. Procédé selon la revendication 11,
**caractérisé en ce que**
dans une zone côté extrémité et dans une zone centrale de la conduite de fluide (1) chauffante l'au moins une bande de fixation adhésive (11, 12) pour empêcher un desserrement et/ou détachement de l'élément de film résistant aux hautes températures (3) est appliquée sur celui-ci.

13. Procédé selon la revendication 11 ou 12,
**caractérisé en ce que**
deux bandes de fixation adhésive (11, 12) sont appliquées dans la direction longitudinale de la conduite de fluide (1) chauffante l'une à côté de l'autre, en particulier de manière espacée l'une à côté de l'autre ou de manière à se chevaucher.
